# EUROPEAN PATENT SPECIFICATION

(11) **EP 1 355 434 B1**
(45) Date of publication and mention of the grant of the patent: **29.12.2004**
(21) Application number: 02360125.5
(22) Date of filing: 19.04.2002
(51) Int. Cl.: H04B 7/06, H04Q 7/38, H04L 1/00, H04L 1/20

(54) **A method for transmitting a signal between a terminal and a network component**
Verfahren zur Übertragung eines Signals zwischen einem Endgerät und einer Netzwerkeinheit
Procédé pour la transmission d'un signal entre un terminal et une entité de réseau

(43) Date of publication of application: 22.10.2003
(73) Proprietor: ALCATEL, 75008 Paris (FR)
(72) Inventor: Braun, Volker, Dr., Ing., 70178 Stuttgart (DE); Herzog, Günther, Dipl.-Ing., 70439 Stuttgart (DE); Wilhelm, Michael, Dipl.-Ing., 71665 Vaihingen an der Enz (DE); Weber, Andreas, Dr. Ing., 71032 Böblingen (DE)
(74) Representative: Rausch, Gabriele, Dr.

(56) References cited:
- EP-A- 0 419 205
- WO-A-01/69814
- WO-A-99/20016
- US-A- 5 577 087
- US-A- 5 991 618

## Description

### Field of the invention

The present invention generally relates to the field of communication systems and, more particularly but without limitation, to cellular mobile communication systems that support transmit diversity.

### Background and prior art

Diversity is a commonly used technique in mobile radio systems to combat signal fading. The basic principle of diversity is as follows. If at least two replicas of the same information carrying signal are received over at least two channels with comparable strengths and that exhibit independent fading, then there is a good likelihood that at least one or more of these of the received signals will not be in a fade at any given instant in time, thus making it possible to deliver adequate signal level to the receiver.

Without diversity techniques, in noise limited conditions, the transmitter will have to deliver a much higher power level to protect the link during the short intervals when the channel is severely faded. In mobile radio, the power available on the reverse link is limited by the battery capacity in handheld subscriber units. Diversity methods play a crucial role in reducing transmit power needs. Also, cellular communication networks are mostly interference limited and once again mitigation of channel fading through use of diversity can translate into improved interference tolerance, which in turn means greater ability to support additional users and therefore higher system capacity.

There are several techniques for obtaining diversity branches or, as they are sometimes also known, diversity dimensions. An important technique for obtaining diversity is space diversity. Space diversity in turn can be used in the receiver (receive (Rx) diversity) and for transmission (transmit (Tx) diversity).

This has historically been the most common form of diversity in mobile radio base stations. It is relatively easy to implement and does not require additional frequency spectrum resources. Space diversity is exploited on the reverse link at the base station receiver by spacing antennas apart so as to obtain sufficient decorrelation.

The key for obtaining uncorrelated fading of antenna outputs is adequate spacing of the antennas. The required spacing depends on the degree of multipath angle spread. For example, if the multipath signals arrive from all directions in the azimuth, as is usually the case at the mobile, antenna spacing of the order of 0,5λ - 0,8λ is quite adequate. On the other hand, if the multipath angle spread is small, as in the case of base stations, the coherence distance is much larger. In order to realize a spatial diversity constellation (i.e. spatially separated antennas) at the base station site, typically an antenna spacing of 10λ -20λ for linearly polarized antennas is used. Alternatively, cross-polarized antennas can be used.

Other techniques for obtaining diversity include polarisation diversity, angle diversity, frequency diversity, path diversity and time diversity. An overview of various diversity schemes is given in "The mobile communications handbook" edited by Jerry D. Gibson, ISBN 0-8493-8573-3.

WO 01 / 69 814 A1 shows a transmit diversity method and system. Several beams are generated using an antenna array with more than two antennas, wherein an open-loop diversity is used to split the transmission between the beams and a closed-loop feedback-based diversity is used to optimise the beams as well as possibly the division of power between the beams. A dynamic mode change can be achieved so as to omit the division into two signal parts in environments where a single beam transmission leads to a sufficient transmission quality.

It is an object of the present invention to improve the usage of transmit diversity schemes in order to improve the quality of the communication link between a terminal and a network component in a communication system.

### Summary of the invention

The object of the invention is solved basically by applying the features laid down in the independent claims. Preferred embodiments of the invention are given in the dependent claims.

The present invention is based on the discovery that diversity is not always beneficial. For example, if there is a line of sight between the terminal and the antennas diversity can deteriorate the quality of the communications link because of interferences. However diversity is found to be beneficial if there is no such line of sight and therefore no direct transmission path between the terminal and the antennas. The presence of a line of sight is correlated with the quality of the communication link between the terminal and the network component.

If the quality is relatively high this means that it is likely that there is a line of sight between the terminal and the antennas. As a consequence transmit diversity is switched off in this instance in accordance with the present invention. In the opposite case, i.e. if the quality of the communication link between the terminal and the antennas is relatively low this means that a line of sight is not likely to exist. As a consequence transmit diversity on is selected for the communication link in order to improve the quality.

In accordance with a preferred embodiment of the invention transmit diversity techniques such as delay diversity or space-time coding or antenna hopping are utilized.

In accordance with a preferred embodiment of the invention the quality of the communication link is determined by determining the quality of the downlink in the terminal. A corresponding quality measure is then communicated to the network component over a control or signalling channel.

In accordance with a further preferred embodiment of the invention a coding and / or a modulation scheme is selected from a predetermined set of coding and / or modulation schemes depending on the quality measure.

Conventionally, a communication system operates using a single modulation scheme and a single coding scheme with a certain rate for transmission of information under all radio channel conditions. However, as the number of mobile users increases, the radio channel conditions become more diverse in different areas and at different times. The interference from several simultaneous transmissions may severely degrade performance for a certain combination of modulation and coding with a high user bit rate, while at other instants, the interference level may be low enough to allow for such a combination. More recently, however, dynamic adaptation of modulation and coding scheme combinations used for transmission in radiocommunication systems has been considered as an alternative.

Depending upon the radio channel conditions, a suitable combination with a sufficient robustness may be applied and an optimal user bit rate may be provided. Switching between different combinations of modulation and coding during transmission is called link adaptation and this feature is being considered for future radiocommunication systems and as an improvement for existing systems. An example of a communication system employing multiple modulation schemes is found in U.S. Pat. No. 5,577,087. Therein a technique for switching between a higher level QAM and QPSK is described. The decision to switch between modulation types is made based on quality measurements.

For example, General Packet Radio Service (GPRS), which is a GSM extension for providing packet data service, supports four channel coding schemes. A Convolutional Half-Rate Code scheme, CS1 coding scheme, which is the "mother" channel coding scheme of GPRS. The CS1 scheme is punctured to obtain approximately two-third rate and three-fourth rate code schemes, CS2 and CS3 coding schemes. GPRS also supports an uncoded scheme, known as CS4 coding scheme.

Enhanced GPRS (EGPRS) is an example for a system where both the coding scheme and the modulation is selected depending on channel conditions. EGPRS supports four coding schemes similar to CS1, CS2, CS3 and CS4 of GPRS and in addition allows to select the modulation scheme, i.e. GMSK or 8 PSK. This results in a set of 9 modulation and coding schemes MCS1, MCS2, MCS3, MCS4, MCS5, MCS6, MCS7, MCS8 and MCS9.

In accordance with a further preferred embodiment of the invention the selection of a modulation and / or coding scheme in the link adaptation (LA) is utilized to determine transmit diversity on or off. The selection of a modulation and or coding scheme by the LA mechanism depends on the quality of the communication channel between the terminal and the network component. A threshold quality level is defined by one of the modulation and or coding schemes of the available modulation and / or coding schemes.

For example, in the case of GPRS, the threshold quality level can be defined by CS3. If the LA mechanism selects the CS4 coding, this implies that the quality of the communication link is very high. As CS4 is above CS3 this means that transmit diversity off is selected.

Likewise, if the LA mechanism selects CS1, this means that the quality of the communication link is low. As CS1 is below CS3, transmit diversity on is selected. Likewise one of the modulation and coding schemes of EGPRS can be used to define such a threshold quality level.

For example MCS4 can be used to define the threshold quality level. If the LA mechanism selects MCS1, MCS2, MCS3 or MCS4, this means that the quality is relatively bad and therefore transmit diversity on is selected. If the LA mechanism selects MCS5, MCS6, MCS7, MCS8 or MCS9, this means that the channel quality is relatively high. This means that transmit diversity off is selected.

In accordance with a further preferred embodiment of the invention the terminal velocity is compared with a threshold level. The terminal velocity can be determined in terms of the Doppler spread of the signal received from the mobile. Transmit Diversity ON is selected if the terminal velocity (or Doppler spread of the signal received from the mobile) is below the threshold level, and Transmit Diversity OFF is selected in the opposite case.

This approach is particularily beneficial if it is used in conjunction with a Space-Time Coding technique as disclosed in E. Lindskog and A. Paulraj, "A Transmit Diversity Scheme for Channels with Intersymbol Interference," Proceedings of 2000 IEEE International Conference on Communications ICC'2000, vol. 1, pp. 307-311, June 2000. This coding technique is specially adapted for applications with intersymbol-interference as in GSM/GPRS/EGPRS.

### Brief description of the drawings

In the following preferred embodiments of the invention are explained in greater detail by making reference to the drawings in which
- Figure 1: is a block diagram of a preferred embodiment of a communication system in accordance with the invention,
- Figure 2: is illustrative of a flow chart of an embodiment of a method of the invention.

### Detailed description

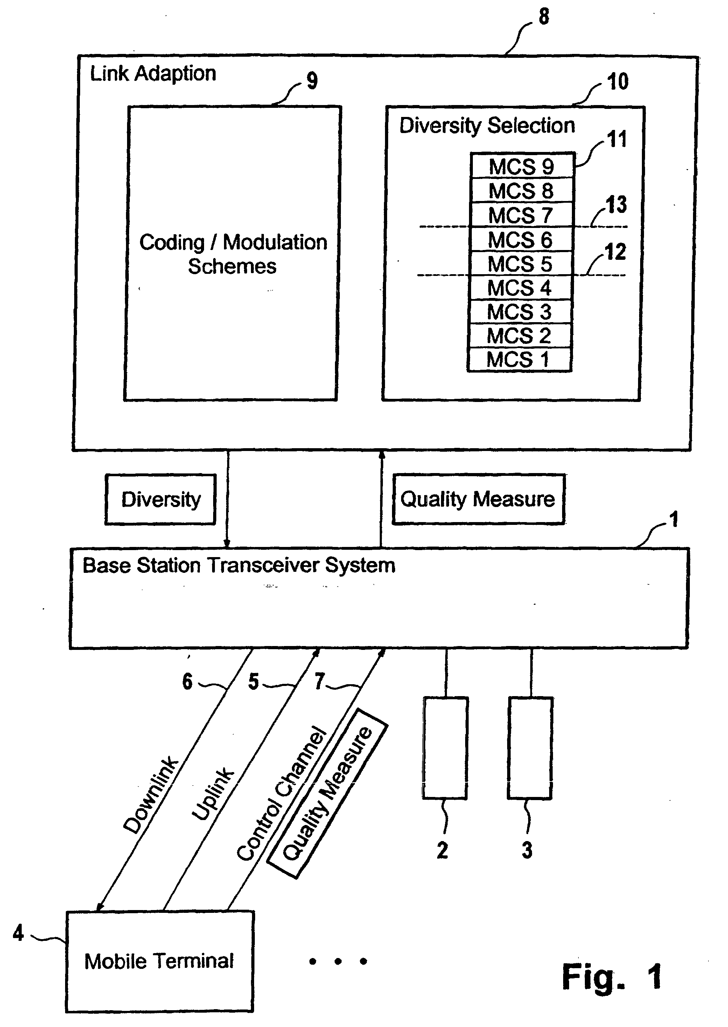

Figure 1 illustrates a cell of a mobile cellular communications network. Within the cell there is a base station transceiver system (BTS) 1 having at least two antennas 2 and 3 to establish communication links with mobile terminals 4 within the cell. The antennas 2 and 3 are spaced apart in order to enable space transmit diversity.

In order to realize a duplex connection between the mobile terminal 4 and the BTS 1 an uplink 5 and a downlink 6 are established. In the preferred embodiment considered here the quality of the communication link is determined within the mobile terminal 4 by measuring the bit error rate (BER) and the fluctuation in BER as quality measures. The BER and / or the fluctuation in BER are communicated from the mobile terminal 4 to the BTS 1 via control channel 7.

The BTS 1 is coupled to link adaptation (LA) module 8. The quality measure (s) is/are used as input(s) to the LA module 8 from the BTS 1.

The LA module 8 has a variety of coding and / or modulation schemes 9, such as CS1 to CS4 in the case of GPRS or MCS1 to MCS9 in the case of EGPRS.

Further the LA module 8 has a diversity selection module 10. The diversity selection module 10 contains a table 11. The table 11 serves to store an ordered list of the available coding and / or modulation schemes 9. For example the coding and / or modulation scheme of the set of coding and / or modulation schemes 9 which corresponds to the lowest quality channel is entered at the bottom of the table 11. In the case of a EGPRS system this means that the modulation and coding scheme MCS1 is entered at the bottom most entry of table 11.

Further a quality threshold level 12 is defined, which determines whether for a given coding and modulation scheme transmit diversity on or off is selected. For those modulation and coding schemes below the quality threshold level 12, i.e. MCS1 to MCS4, the quality of the communication link with the mobile terminal 4 is considered relatively bad, such that transmit diversity on is selected. In the opposite case, i.e. for modulation and coding schemes MCS5 to MCS9 above the quality threshold level 12, transmit diversity off is selected.

The selection of transmit diversity on or off is communicated from the LA module 8 to the BTS 1. In response the BTS 1 switches transmit diversity on or off with respect to the communication link to mobile terminal 4.

In addition a further quality threshold level 13 above quality threshold 12 can be defined for implementation of hysteresis. For example the system switches from transmit diversity on to transmit diversity off if an MCS above the quality threshold level 13 is selected by the LA module 8. The system switches back to transmit diversity on, if the quality falls below the quality threshold level 12.

Alternatively the systems switches from transmit diversity on to transmit diversity off if a certain time has elapsed, i.e. transmit diversity on is used for a certain time period; when the time period has elapsed the system switches back to transmit diversity off. The time period can be selected depending on the mobile terminal 4 velocity, which can be measured from the Doppler shift.

As a further alternative a combination of elapsed time and hysteresis can be used to switch between transmit diversity on and transmit diversity off.

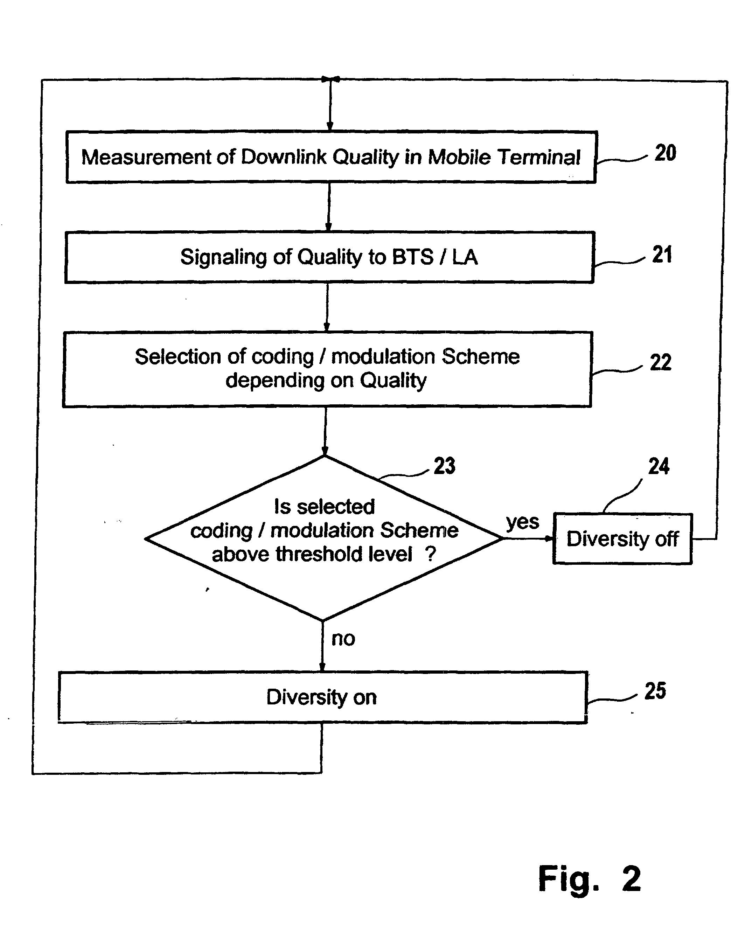

This scheme is particularly advantageous in that it requires only low implementation complexity and substantially improves the communication quality. The method of the invention is further explained by making reference to figure 2.

In step 20 the quality of the downlink is measured in the mobile terminal. A corresponding quality measure is signalled to the BTS and the LA in step 21.

In response a coding and or modulation scheme is selected in step 22; this selection depends on the quality measure.

In step 23 it is decided, whether the selected coding and / or modulation scheme is above a predefined quality threshold level. If this is the case transmit diversity off is selected in step 24 and the control goes back to step 20. If the contrary is the case transmit diversity on is selected in step 25 and the control goes back to step 20.

As explained above a more complex scheme allowing hysteresis and / or elapse time can be implemented by changing the test of step 23, i.e. by combining one or more additional criteria such as an additional threshold level and / or time period, in order to select transmit diversity on or off.

### list of reference numerals

- base station transceiver system (BTS): 1
- antenna: 2
- antenna: 3
- mobile terminal: 4
- uplink: 5
- downlink: 6
- control channel: 7
- link adaptation (LA) module: 8
- coding and / or modulation schemes: 9
- diversity selection module: 10
- table: 11
- quality threshold level: 12
- quality threshold level: 13

## Claims

1. A method for transmitting a signal between a terminal and a network component, the method comprising the steps of:
- providing a first predefined set of coding schemes,
- providing a second predefined set of modulation schemes,
- selecting one of the coding schemes and one of the modulation schemes by means of link adaptation, the combination of the selected coding scheme and the selected modulation scheme being used as a quality measure of a communication link between the terminal and the network component,
- comparing the quality measure with a threshold quality level, the threshold quality level being defined as a predetermined combination of one of the coding schemes of the first predefined set and one of the modulation schemes of the second predefined set,
- selecting transmit diversity off, if the quality measure is above the threshold quality level, and selecting transmit diversity on, if the quality measure is below the threshold quality level.

2. The method of claim 1, whereby the quality measure is determined by the terminal and is transmitted from the terminal to the network component via a control channel.

3. The method of claim 1, the communication link being established in a cellular mobile communication network.

4. The method of claim 1, the predetermined set of coding schemes comprising CS1, CS2, CS3 and CS4 of GPRS or the predetermined set of coding and modulation schemes comprising MCS1, MCS2, MCS3, MCS4, MCS5, MCS6, MCS7, MCS8 and MCS9 of EGPRS.

5. The method of claim 1, whereby the quality measure is determined based on the velocity of the terminal.

6. A network component of a communication network comprising:
- link adaptation means (4) for determining a quality measure of a communication link between the terminal and the network component, the quality measure being given by a combination of a coding scheme selected from a first predefined set of coding schemes and a modulation scheme selected from a second predefined set of modulation schemes by the link adaptation means,
- means (10) for comparing the quality measure with a threshold quality level (12, 13), the threshold quality level being defined by a predetermined combination of one of the coding schemes of the first predefined set and one of the modulation schemes of the second predefined set
- means (10) for selecting transmit diversity off, if the quality measure is above the threshold quality level, and selecting transmit diversity on, if the quality measure is below the threshold quality level.

7. The network component of claim 6, the means for determining a quality measure comprising control channel (7) input means for receiving the quality measure from the terminal.

8. The network component of claim 7, the predetermined set of coding schemes comprising CS1, CS2, CS3 and CS4 of GPRS or the predeter mined set of coding and modulation schemes comprising MCS1, MCS2, MCS3, MCS4, MCS5, MCS6, MCS7, MCS8 and MCS9 of EGPRS.

9. The network component of claim 6, the means for determining a quality measure being adapted to determine the quality based on the velocity of the terminal.

10. A cellular mobile communications system comprising at least one terminal and a network component for each of the cells, the network component comprising:
- link adaptation means (4) for determining a quality measure of a communication link between the terminal and the network component the quality measure being given by a combination of a coding scheme selected from a first predefined set of coding schemes and a modulation scheme selected from a second predefined set of modulation schemes by the link adaptation means,
- means (10) for comparing the quality measure with a threshold quality level (12, 13)the threshold quality level being defined by a predetermined combination of one of the coding schemes of the first predefined set and one of the modulation schemes of the second predefined set
- means (10) for selecting transmit diversity off, if the quality measure is above the threshold quality level, and selecting transmit diversity on, if the quality measure is below the threshold quality level.

## Patentansprüche

1. Ein Verfahren zur Übertragung eines Signals zwischen einem Endgerät und einer Netzwerkeinheit, wobei das Verfahren die folgenden Schritte umfasst:
- Bereitstellung eines ersten vordefinierten Satzes von Codierungsverfahren
- Bereitstellung eines zweiten vordefinierten Satzes von Modulationsverfahren
- Auswahl eines der Codierungsverfahren und eines der Modulationsverfahren mittels einer Verbindungs-Anpassung, wobei die Kombination des gewählten Codierungsverfahrens und des gewählten Modulationsverfahrens als Qualitäts-Maßzahl einer Kommunikationsverbindung zwischen dem Endgerät und der Netzwerkeinheit verwendet wird,
- Vergleich der Qualitäts-Maßzahl mit einem Qualitäts-Schwellwert, wobei der Qualitäts-Schwellwert als eine vorher festgelegte Kombination eines der Codierungsverfahren des ersten vorher festgelegten Satzes und eines der Modulationsverfahren des zweiten vorher festgelegten Satzes definiert ist,
- Auswahl, die Sende-Diversity auszuschalten, wenn die Qualitäts-Maßzahl über dem Qualitäts-Schwellwert liegt, und die Sende-Diversity einzuschalten, wenn die Qualitäts-Maßzahl unter dem Qualitäts-Schwellwert liegt.

2. Das Verfahren aus Anspruch 1, wobei die Qualitäts-Maßzahl vom Endgerät bestimmt wird und vom Endgerät über einen Steuerkanal zur Netzwerkeinheit übertragen wird.

3. Das Verfahren aus Anspruch 1, wobei die Kommunikationsverbindung in einem Zellular-Mobilkommunikationsnetz aufgebaut wird.

4. Das Verfahren aus Anspruch 1, wobei der vordefinierte Satz von Codierungsverfahren CS1, CS2, CS3 und CS4 von GPRS umfasst, oder der Satz von Codierungs- und Modulationsverfahren MCS1, MCS2, MCS3, MCS4, MCS5, MCS6, MCS7, MCS8 und MCS9 von EGPRS umfasst.

5. Das Verfahren aus Anspruch 1, wobei die Qualitäts-Maßzahl auf der Grundlage der Geschwindigkeit des Endgerätes bestimmt wird.

6. Eine Netzwerkeinheit eines Kommunikationsnetzes, die folgendes umfasst:
- Verbindungs-Anpassungs-Mittel (4) zur Bestimmung einer Qualitäts-Maßzahl einer Kommunikationsverbindung zwischen dem Endgerät und der Netzwerkeinheit, wobei die Qualitäts-Maßzahl durch eine von den Verbindungs-Anpassungs-Mitteln ausgewählte Kombination eines Codierungsverfahrens, das aus einem ersten vordefinierten Satz von Codierungsverfahren ausgewählt wird, und einem Modulationsverfahren, das aus einem zweiten vordefinierten Satz von Modulationsverfahren ausgewählt wird, gegeben ist,
- Mittel (10) zum Vergleich der Qualitäts-Maßzahl mit einem Qualitäts-Schwellwert (12, 13), wobei der Qualitäts-Schwellwert durch eine vordefinierte Kombination eines der Codierungsverfahren des ersten vordefinierten Satzes und eines der Modulationsverfahren des zweiten vordefinierten Satzes definiert wird
- Mittel (10) zur Auswahl, die Sende-Diversity auszuschalten, wenn die Qualitäts-Maßzahl über dem Qualitäts-Schwellwert liegt, und die Sende-Diversity einzuschalten, wenn die Qualitäts-Maßzahl unter dem Qualitäts-Schwellwert liegt.

7. Die Netzwerkeinheit aus Anspruch 6, wobei die Mittel zur Bestimmung einer Qualitäts-Maßzahl Steuerkanal-(7)-Eingabemittel zum Empfang der Qualitäts-Maßzahl vom Endgerät umfassen.

8. Die Netzwerkeinheit aus Anspruch 7, wobei der vordefinierte Satz von Codierungsverfahren CS1, CS2, CS3 und CS4 von GPRS umfasst, oder der Satz von Codierungs- und Modulationsverfahren MCS1, MCS2, MCS3, MCS4, MCS5, MCS6, MCS7, MCS8 und MCS9 von EGPRS umfasst.

9. Die Netzwerkeinheit aus Anspruch 6, wobei die Mittel zur Bestimmung einer Qualitäts-Maßzahl so angepasst sind, dass sie die Qualitäts-Maßzahl auf der Grundlage der Geschwindigkeit des Endgerätes bestimmen.

10. Ein Zellular-Mobilkommunikationssystem, das mindestens ein Endgerät und eine Netzwerkeinheit für jede der Zellen enthält, wobei Netzwerkeinheit folgendes umfasst:
- Verbindungs-Anpassungs-Mittel (4) zur Bestimmung einer Qualitäts-Maßzahl einer Kommunikationsverbindung zwischen dem Endgerät und der Netzwerkeinheit, wobei die Qualitäts-Maßzahl durch eine von den Verbindungs-Anpassungs-Mitteln ausgewählte Kombination eines Codierungsverfahrens, das aus einem ersten Satz von vordefinierten Codierungsverfahren ausgewählt wird, und einem Modulationsverfahren, das aus einem zweiten vordefinierten Satz von Modulationsverfahren ausgewählt wird, gegeben ist,
- Mittel (10) zum Vergleich der Qualitäts-Maßzahl mit einem Qualitäts-Schwellwert (12, 13), wobei der Qualitäts-Schwellwert durch eine vordefinierte Kombination eines der Codierungsverfahren des ersten vordefinierten Satzes und eines der Modulationsverfahren des zweiten vordefinierten Satzes definiert wird
- Mittel (10) zur Auswahl, die Sende-Diversity auszuschalten, wenn die Qualitäts-Maßzahl über dem Qualitäts-Schwellwert liegt, und die Sende-Diversity einzuschalten, wenn die Qualitäts-Maßzahl unter dem Qualitäts-Schwellwert liegt.

## Revendications

1. Méthode de transmission d'un signal entre un terminal et un composant de réseau, cette méthode comprenant les étapes de :
- fourniture d'un premier ensemble prédéfini de schémas de codage,
- fourniture d'un second ensemble prédéfini de schémas de modulation,
- sélection de l'un des schémas de codage et de l'un des schémas de modulation au moyen d'une adaptation de liaison, la combinaison du schéma de codage sélectionné et du schéma de modulation sélectionné étant utilisée pour mesurer la qualité d'une liaison de communication entre le terminal et le composant de réseau,
- comparaison de la mesure de qualité à un niveau de qualité de seuil, ce niveau de qualité de seuil étant défini comme une combinaison prédéterminée des schémas de codage du premier ensemble prédéfini et de l'un des schémas de modulation du second ensemble prédéfini,
- sélection de la désactivation de la diversité de transmission, si la mesure de qualité est au-dessus du niveau de qualité de seuil, et sélection de l'activation de la diversité de transmission, si la mesure de qualité est au-dessous du niveau de qualité de seuil.

2. Méthode selon la revendication 1, la mesure de qualité étant déterminée par le terminal et transmise du terminal au composant de réseau via un canal de contrôle.

3. Méthode selon la revendication 1, la liaison de communication étant établie dans un réseau de communication mobile cellulaire.

4. Méthode selon la revendication 1, l'ensemble prédéterminé de schémas de codage comprenant les CS1, CS2, CS3 et CS4 DU GPRS ou l'ensemble prédéterminé de schémas de codage et modulation comprenant les MCS1, MCS2, MCS3, MCS4, MCS5, MCS6, MCS7, MCS8 et MCS9 de l'EGPRS.

5. Méthode selon la revendication 1, la mesure de qualité étant déterminée en fonction de la vélocité du terminal.

6. Composant de réseau d'un réseau de communication comprenant :
- des moyens d'adaptation de liaison (4) pour déterminer une mesure de qualité d'une liaison de communication entre le terminal et le composant de réseau, la mesure de qualité étant donnée par une combinaison d'un schéma de codage sélectionné dans un premier ensemble prédéfini de schémas de codage et un schéma de modulation sélectionné dans un second ensemble prédéfini de schémas de modulation par les moyens d'adaptation de liaison,
- des moyens (10) de comparaison de la mesure de qualité à un niveau de qualité de seuil (12, 13), ce niveau de qualité de seuil étant défini par une combinaison prédéterminée de l'un des schémas de codage du premier ensemble prédéfini et de l'un des schémas de modulation du second ensemble prédéfini,
- des moyens (10) de sélection de la désactivation de la diversité de transmission, si la mesure de qualité est au-dessus du niveau de qualité de seuil, et sélection de l'activation de la diversité de transmission, si la mesure de qualité est au-dessous du niveau de qualité de seuil.

7. Composant de réseau selon la revendication 6, moyens de détermination de mesure de qualité comprenant des moyens d'entrée de canal de contrôle (7) destinés à recevoir la mesure de qualité depuis le terminal.

8. Composant de réseau selon la revendication 7, l'ensemble prédéterminé de schémas de codage comprenant les CS1, CS2, CS3 et CS4 du GPRS ou l'ensemble prédéterminé de schémas de codage et modulation comprenant les MCS1, MCS2, MCS3, MCS4, MCS5, MCS6, MCS7, MCS8 et MCS9 de l'EGPRS.

9. Composant de réseau selon la revendication 6, les moyens de détermination de la mesure de qualité étant adaptés pour déterminer la qualité en fonction de la vélocité du terminal.

10. Système de communications mobile cellulaire comprenant au moins un terminal et un composant de réseau pour chacune des cellules, le composant de réseau comprenant :
- des mayens d'adaptation de liaison (4) pour déterminer une mesure de qualité d'une liaison de communication entre le terminal et le composant de réseau, la mesure de qualité étant donnée par une combinaison d'un schéma de codage sélectionné dans un premier ensemble prédéfini de schémas de codage et un schéma de modulation sélectionné dans un second ensemble prédéfini de schémas de modulation par les moyens d'adaptation de liaison,
- des moyens (10) de comparaison de la mesure de qualité à un niveau de qualité de seuil (12, 13), ce niveau de qualité de seuil étant défini par une combinaison prédéterminée de l'un des schémas de codage du premier ensemble prédéfini et de l'un des schémas de modulation du second ensemble prédéfini,
- des moyens (10) de sélection de la désactivation de la diversité de transmission, si la mesure de qualité est au-dessus du niveau de qualité de seuil, et de sélection de l'activation de la diversité de transmission, si la mesure de qualité est au-dessous du niveau de qualité de seuil.
